# EUROPEAN PATENT APPLICATION

(11) **EP 2 020 633 A1**
(43) Date of publication of application: **04.02.2009**
(21) Application number: 07120700.5
(22) Date of filing: 14.11.2007
(51) Int. Cl.: G06F 3/048

(54) **Space-constrained marking menus for mobile devices**

(30) Priority: 31.07.2007 US 831632
(71) Applicant: Palo Alto Research Institute Incorporated, Palo Alto, CA 94304 (US)
(72) Inventor: Newman, Mark W, Ann Arbor, CA 48104 (US); Partridge, Kurt, Palo Alto, CA 94306 (US)
(74) Representative: Skone James, Robert Edmund

(57) **Abstract**

The present invention provides a user interface. The user interface includes a touch-screen display and a set of marking menus comprising at least one radial menu which is displayed on the touch-screen display. A radial menu allows a user to select a menu item by performing a stroke on the touch-screen display in a direction corresponding to a slice of the radial menu associated with the menu item. All the slices of a radial sub-menu are substantially at an angle of approximately 90° or less with respect to a previous stroke leading from a previous radial menu, thereby allowing a series of consecutive strokes to end near the origin of the first stroke.

## Description

The present disclosure relates to computer user interfaces. More specifically, the present disclosure relates to space-constrained marking menus that can facilitate single-hand operation of a hand-held device.

The recent developments in mobile computing technologies have stimulated integration of different communication and network applications into a single hand-held device. For example, smart phones and personal data assistants (PDAs) can provide voice-communication services, Internet connectivity, and multi-media applications in one palm-sized device. Meanwhile, advances in display and input technologies, such as liquid-crystal displays (LCDs) and touch screens, allow more precise and ergonomic touch-screen displays with higher resolution. However, the design of a small-size, intuitive, easy-to-use, easy-to-learn, and functionality-rich graphic user interface remains a challenge.

One embodiment of the present invention provides a user interface. The user interface includes a touch-screen display and a set of marking menus comprising at least one radial menu which can be displayed on the touch-screen display. A radial menu allows a user to select a menu item by performing a stroke on the touch-screen display in a direction corresponding to a slice of the radial menu associated with the menu item. In this embodiment, all the slices of a radial sub-menu are substantially at an angle of approximately 90° or less with respect to a previous stroke leading from a pervious radial menu, thereby allowing a series of consecutive strokes to end near the origin of the first stroke.

In a variation on this embodiment, the marking menus comprise at least one initial radial menu and at least one radial sub-menu. Furthermore, a radial sub-menu can be an edge radial menu placed along an edge of the touch-screen display, or a corner radial menu placed in a corner of the touch-screen display.

In a further variation, the edge radial menu comprises three slices. Two of the three slices are in opposite directions along the edge. The middle slice of the three slices corresponds to a stroke which is substantially perpendicular to the edge and points away from the edge.

In a further variation, the three slices do not have equal sizes.

In a further variation, a wedge angle of the middle slice is greater than those of the other two slices.

In a further variation, the corner radial menu comprises three slices. Two of the three slices on the outside are along the directions of the edges which form the corner, respectively. Furthermore, the middle slice of the three slices corresponds to a stroke which substantially points to a corner that is opposite to the corner associated with the corner radial menu.

In a further variation, the three slices do not have equal sizes.

In a further variation, a wedge angle the middle slice is larger than those of the other two slices.

In one variation on this embodiment, the marking menus comprise at least one of a radial menu that is deformed based on the shape of the touch-screen display and a radial menu wherein the slices therein are grouped in locations where the perimeter of the radial menu is visible.

In one variation on this embodiment, the marking menus are configured to allow a user to select a menu item by maintaining contact with a corresponding slice for a predetermined period.

In one variation on this embodiment, the marking menus are configured to allow a user to select a menu item by drawing a stroke either beyond the perimeter of a corresponding slice or by hitting an edge of the touch-screen display. Typically, the device is portable and hand-held. The menu items are preferably selectable using one hand, e.g. using the operator's thumb.

Some examples of systems according to the invention will now be described and compared with a known system with reference to the accompanying drawings, in which:-

FIG. 1 illustrates conventional marking menus which can be navigated with a stylus and be displayed on a sufficiently large display area.

FIG. 2 illustrates an exemplary transition diagram between different marking menus displayed on a space-constrained display in accordance with one embodiment of the present invention.

FIG. 3 illustrates various configurations for an initial marking menu in accordance with one embodiment of the present invention.

FIG. 4 illustrates an exemplary configuration of a corner radial menu containing slices with unequal wedge angles and a center region for an additional menu item, in accordance with one embodiment of the present invention.

FIG. 5 illustrates different ways to deform and re-layout radial menus in accordance with one embodiment of the present invention.

FIG. 6 illustrates an exemplary configuration where corner sub-menus are placed against a corner of the display screen in accordance with one embodiment of the present invention.

FIG. 7 illustrates an exemplary configuration where corner marking menus are placed at the end of a previous stroke in accordance with one embodiment of the present invention.

FIG. 8 illustrates a mark which includes three strokes, wherein the end of the last stroke is in the vicinity of the beginning of the first stroke, in accordance with one embodiment of the present invention.

FIG. 9 illustrates an exemplary computer system that facilitates a space-constrained marking-menu user interface in accordance with one embodiment of the present invention.

One challenge in designing an easy-to-use user interface for hand-held devices is the presentation of menu items. Many smart phones and PDAs still use the conventional "drop-down" or "pop-up" style menus. Although these menu styles benefit from user familiarity because of their resemblance to desktop menus, they are difficult to manage on a hand-held device. These conventional menu items can be fairly small due to the high resolution and limited size of the display. Consequently, a user often has to use a fine-pointed stylus to active a menu item on a touch-screen display. Such stylus operation requires both hands, one for holding the device and one for holding the stylus, which is often burdensome. Furthermore, in conventional menus with multiple hierarchies, a user may be required to traverse a number of menu hierarchies before reaching a desired menu item, which can be time-consuming and error-prone.

Embodiments of the present invention adopt special types of menus, called "marking menus," to facilitate operation of hand-held devices. Marking menus are typically implemented on touch screens and work as follows. During operation, a user presses down on the screen with an object, such as a stylus or finger, and waits for a certain period, typically less than a second (this operation is referred to as "press-and-wait"). A radial menu then appears. In one embodiment, the radial menu appears directly under the press-and-wait contact point on the screen. Note that a conventional radial menu typically has a circular shape, and the menu items are assigned to different "slices" or "wedges" of the circle.

After the radial menu appears, the user then highlights an item by making a stroke with the stylus or finger towards the desired item. If the selected item corresponds to a sub-menu, another radial menu can appear at the end of the stroke. The user can then select a menu item by making another stroke on the sub-menu. Note that the user can also make a series of selections in an "expert mode" by drawing consecutive, connected strokes. In expert mode, the user does not perform "press-and-wait" and the user interface typically does not display the radial menus. Hence, the user can quickly bypass several menu hierarchies if he/she can remember the positions of the appropriate menu items. Note that, in this disclosure, the process of selecting menu items based on displayed radial menus is referred to as the "novice mode."

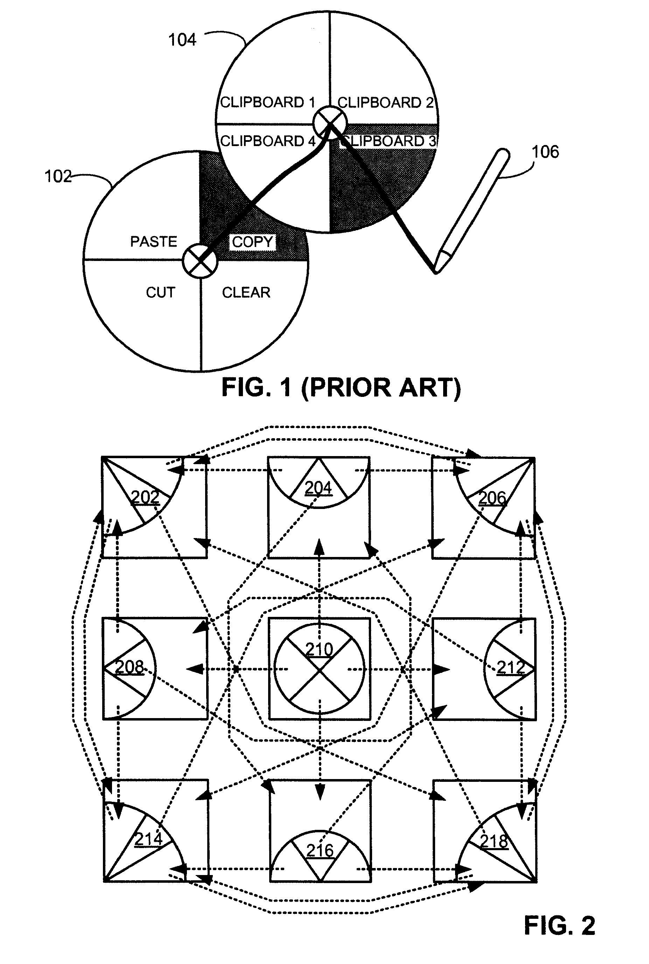

FIG. 1 illustrates conventional marking menus which can be navigated with a stylus and displayed on a sufficiently large display area. When a user uses a stylus 106 to press on the display for a period of time, an initial radial menu 102 appears. Radial menu 102 includes four items, which are placed in four "slices," each of which is approximately 90° wide. In this example, the user first draws a stroke toward the upper-right slice, which is the "copy" operation. This selection results in a sub-menu 104, which further contains four choices with respect to which clipboard to use for the copy operation.

The user can draw a second stroke toward the lower-right slice of sub-menu 104 without lifting stylus 106. This way, the user can traverse two menu levels by drawing consecutive strokes, which form a "mark." Note that the user can optionally draw the two strokes without the press-and-wait process. In this case, the user interface does not present radial menus 102 and 104, and can immediately receive the instruction to perform the copy operation using clipboard 3 after the user completes the two consecutive strokes.

Embodiments of the present invention provide a marking-menu based user interface that can be operated with a thumb. That is, a user can hold the hand-held device and navigate through the menus using the thumb of the holding hand. Marking menus are desirable for thumb-based interaction on touch-sensitive devices because they allow a relatively large number of options to be made available in a small space for selection using a thumb, which is an imprecise instrument. Marking menus do not require any dedicated display space because they are hidden until used. They can also be arranged hierarchically, which means that an arbitrary number of options can be made available.

Furthermore, marking menus can be accessed by both novices (with explicitly displayed radial menus) and experts (without explicitly displayed radial menus). Particularly, the expert-mode performance can be quite high, because accessing a known menu item becomes a gesture, which means that users can effect operations using very fast muscle memory rather than cognitive processing.

Although these features make marking menus more preferable than traditional drop-down or pop-up menus, conventional marking menus are still not ideal for small hand-held devices. The original marking menus were developed in the early 1990's for large-screen displays. One problem with conventional marking menus is that they do not adapt well to space-constrained devices. In particular, since strokes drawn on a series of radial menus can continue to radiate outwards, conventional marking menus do not have any theoretical bound to the amount of space they can require. In other words, several strokes in substantially the same direction can become a "runaway" mark on a small screen. For instance, in the example in FIG. 1, the user can make two consecutive strokes in the same upper-right direction, and the final mark would resemble an almost straight line. If there are multiple menu hierarchies, these strokes, when drawn immediately one after another, can quickly run into the screen edge.

Embodiments of the present invention provide an improved marking-menu system that prevents such runaway strokes. The improved marking-menu configuration can ensure that two consecutive strokes made by a user are not in the same direction. Hence, the end point of a series of strokes can remain in the vicinity of the starting point. Furthermore, the present improved marking-menu system uses both full and partial radial menus, such as quarter-circle menus and half-circle menus. These partial radial menus allow a user to use edges and corners of a touch-screen display, which are often available on hand-held devices, to draw more precise strokes with a thumb.

Embodiments of the present invention provide space-constrained marking menus (SCMMs) which allow an arbitrary number of menu items to be presented in a constrained space, such as the touch-screen display of a hand-held device. As with previous marking menus, SCMMs can be operated in both novice and expert mode. In novice mode, the user presses and holds down on a menu's anchor point, which is typically the center of a radial menu. After a delay (typically on the order of 200-500ms), a radial menu is displayed to allow the user to select an item from the menu. If one of the items is the anchor point for a submenu, the same pattern of selecting and holding can be repeated to display the sub-menu, and so forth. In expert mode, the user simply draws a series of strokes corresponding to a particular series of menu selections in order to invoke the desired operation.

In embodiments of the present invention, different levels of marking menus are configured in such a way that any given sub-stroke is ensured to "double back" towards the origin of the previous stroke. Note that a sub-stroke is a stroke that follows a previous stroke and is typically drawn on a sub-menu invoked by the previous stroke. In particular, the slices of a sub-menu are placed in unique locations so that all sub-strokes are at an angle of approximately 90° or less with respect to the corresponding previous strokes. This is important for mobile devices because they have limited screen sizes. To support multi-level menus, which are required for the complexity of modem applications, consecutive strokes are often arranged to maximize the number of subsequent stroke directions that can be taken.

FIG. 2 illustrates an exemplary transition diagram between different marking menus displayed on a space-constrained display in accordance with one embodiment of the present invention. In one embodiment, there are three types of radial menus: full-circle radial menu, half-circle radial menu, and quarter-circle radial menu. As shown in FIG. 2, there are nine marking-menu placement configurations, labeled 202-218 respectively, to display these three types of radial menus. Note that the squares in FIG. 2 represent boundaries of a touch-screen display. In general, the screen can be square-shaped or rectangular-shaped, and embodiments of the present invention are not limited to square-shaped screens.

The dashed arrows in FIG. 2 represent the transition from a particular menu item, or slice, to another sub-menu. In general, a sub-menu can be a quarter-circle menu or a half-circle menu. A quarter-circle menu can be placed against a corner of the screen and referred to as a corner menu or corner sub-menu, and a half-circle menu can be placed against an edge of the screen and referred to as an edge menu or edge sub-menu. In this example, quarter-circle menus 202, 206, 218, and 214 are placed at the upper left, upper right, lower right, and lower left corners of the screen, respectively. Half-circle menus 204, 212, 216, and 208 are placed against the top, right, bottom, and left edges of the screen, respectively. This configuration ensures that any slice in a sub-menu points substantially towards the previous menu, thereby preventing runaway consecutive strokes.

In one embodiment, the initial menu can be a full-circle radial menu. All the sub-menus are either half-circle or quarter-circle menus, which force the sub-strokes to substantially point back at the previous menu or sub-menu. Note that it is not required that a sub-menu slice points directly back at the previous menu. Runaway strokes can still be avoided so long as a sub-stroke does not point in the same direction as the previous stroke.

For example, the top slice of menu 210 leads to the half-circle sub-menu 204 which is placed along the top edge of the screen. Sub-menu 204 has three slices, and each slice corresponds to a stroke at an angle of 90° or less with respect to the stroke from menu 210 to sub-menu 204. Furthermore, the three slices of sub-menu 204 lead to sub-menus 202, 216, and 206, respectively. Therefore, any combination of strokes leading from menu 210 to sub-menu 204 and to further sub-menus is contained within the screen.

Note that in this example a quarter-circle or half-circle sub-menu has three slices, and the full-circle menu 210 has four slices. In general, other number of slices for any type of menu or sub-menu is also possible. For example, full-circle menu 210 can have six slices, three on the top and three on the bottom (or three on the left and three on the right). Each slice can point to a quarter-circle sub-menu (placed at a corner) or a half-circle sub-menu (placed against an edge). In the example in FIG. 2, the four slices of menu 210 only point to half-circle sub-menus placed at the edges. If menu 210 contains more slices, some of these slices can point to half-circle sub-menus, and some can point to quarter-circle sub-menus.

In general, a quarter-circle menu is not required to be 90° wide, and a half-circle menu is not required to be 180° wide. A quarter-circle menu can be more generally referred to as a corner radial menu, as long as its two straight edges substantially match the shape of a corner of the screen. Similarly, a half-circle menu can be more generally referred to as an edge radial menu, as long as its straight edges substantially match an edge of the screen.

In addition, a quarter-circle or half-circle sub-menu can contain more than three slices. Although the example in FIG. 2 illustrates nine menu-placement locations for the marking menus, the present invention is not limited to this configuration. It is possible to have more menu-placement locations. For example, there can be two half-circle sub-menu locations along each edge of the screen.

Furthermore, the transition relationship illustrated in FIG. 2 is not the only way to implement the present invention. Other transition relationships are also possible. For instance, the right-most slice in sub-menu 206 can lead to sub-menu 212, instead of sub-menu 218.

The aforementioned configuration can be especially useful for thumb based operations. The contact area of a thumb on the touch screen is generally much larger than that of a stylus tip. Hence, a marking menu designed for one-thumb operation ideally has slices that are sufficiently large for relatively error free operation. Hence, on a small screen of a hand-held device, a marking menu could easily take up almost the entire screen space. The present inventive configuration allows large-size sub-menus to be displayed in a limited space while containing the strokes within the screen area. The placement of sub-menus against corners and edges also allows the user to use the actual screen edges, which typically is a material above the screen and forms a "frame" around the screen, as guides when drawing strokes.

Embodiments of the present invention can be implemented with different variations of marking menus.

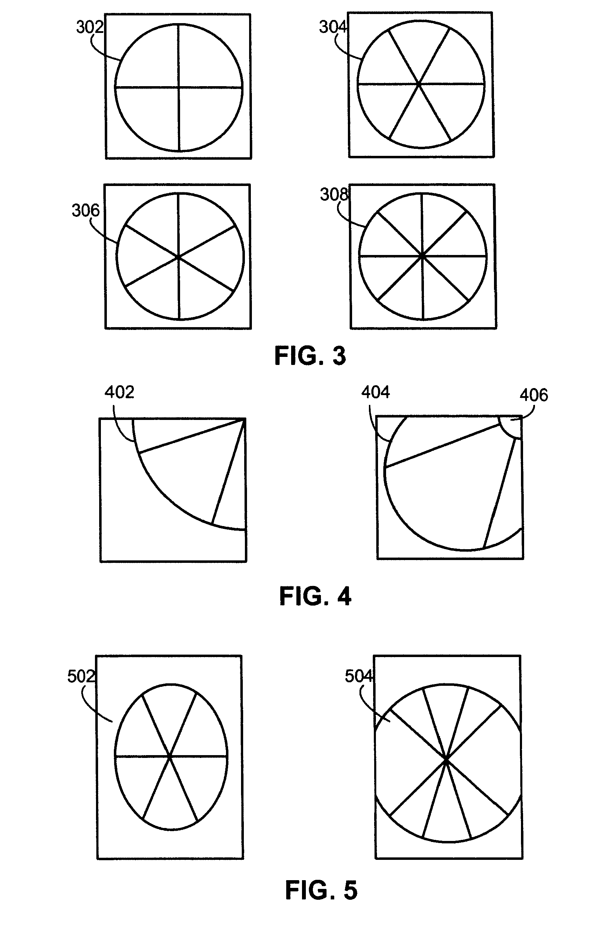

In embodiments of the present invention, a radial menu, either full-circle or partial-circle, can have any number of slices. FIG. 3 illustrates various configurations for an initial marking menu in accordance with one embodiment of the present invention. For example, marking menu 302 contains four slices. Marking menus 304 and 306 each contains six slices with different orientations. Marking menu 308 contains eight slices. Although theoretically there is no limitation as to how many slices a marking menu can contain, eight or fewer slices may be preferable for the marking menu to be easily navigable with the touch of a thumb.

In the example above, a corner radial menu has three slices with equal wedge angles, i.e., 30° each. This angle configuration is equivalent to a full-circle with 12 slices, and hence may limit the menu's accuracy with thumb operations. It may be beneficial to use unequal wedge angles for the slices. In one embodiment, as illustrated by an exemplary corner radial menu 402 in FIG. 4, the two slices along the edges have smaller wedge angles than the slice in the middle. Limiting the angle of a slice along the edge can facilitate more accurate thumb-based operation for two reasons. First, the origin of the sub-stroke is often offset from the screen corner; as a result, the sub-stroke is likely to move in a wedge-shaped region that spans more than 30° across. Second, if the user's thumb makes contact with the screen edge, the edge can serve as a guide which will enhance the accuracy of that sub-stroke. Consequently, the user may need less than 30° of movement tolerance for the edge slices. In further embodiments, as shown by an exemplary corner radial menu 404, the arch of the corner radial menu can be more than a quarter circle. Further more, a center region 406 placed at the corner of the corner radial menu can provide space for an additional menu item. A particularly useful menu action associated with this position would be a "cancellation" function which can cancel the current menu selection and/or close the current corner radial menu.

There are several ways that a user can select a menu after highlighting it. In one embodiment, the user interface allows the user to select an item by drawing the stroke beyond the edge of the corresponding slice of the radial menu. However, on small displays, the radial menu can be relatively large and can occupy almost all the screen space, which leaves little space beyond the radial menu's perimeter. The user interface can cope with this situation with several different approaches. In one embodiment, the user interface can only allow the marking menus to appear if there is enough room beyond the menu's perimeter. Optionally, the user interface can also warp or deform the radial menu, so that some space beyond the menu's perimeter remains visible, as illustrated by the exemplary menu 502 in FIG. 5. Furthermore, the user interface can re-layout the menu to "squeeze" the slices in the direction where the perimeter is visible. As illustrated by the exemplary menu 504 in FIG. 5, six slices are re-located to the top and bottom of the radial menu. The space on the left and right is not occupied by menu items.

In a further embodiment, the user interface can use an extension of the aforementioned perimeter-crossing technique. If the perimeter of a portion of the menu falls outside the touch-screen display, then a menu item is considered selected if the user's contact point which falls within the corresponding slice hits an edge of the touch-screen display, even if the contact point is still within the slice.

In a further embodiment, the user interface can use a timeout-based selection technique. That is, a menu item becomes selected after the user maintains contact with the corresponding slice for longer than a timeout period. This way, the user can select a menu item without drawing a stroke beyond the perimeter of the slice.

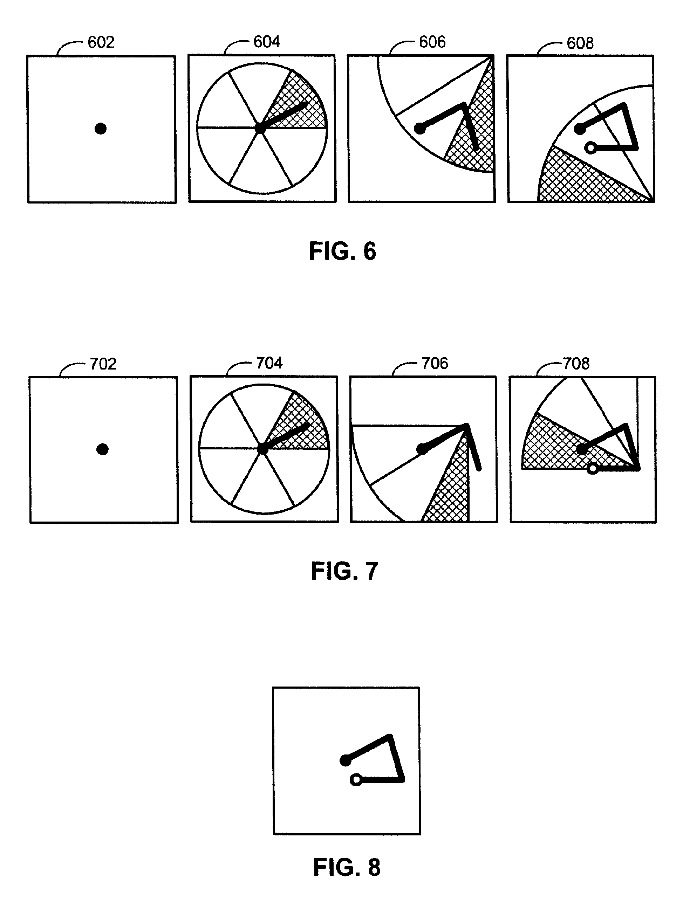

FIG. 6 shows a series of corner sub-menus displayed against screen corners as a result of a series of strokes. A user first makes contact with the touch-screen display and maintains the contact for a period of time (operation 602). Note that the contact point is illustrated as a large dark dot. A full-circle marking menu then appears. The user draws a stroke across the upper right slice (operation 604). Note that a selected slice is indicated by a cross-hatch pattern.

As a result of this stroke, the user interface displays a corner sub-menu against the upper right corner of the screen. The user subsequently makes a downward sub-stroke to select the slice along the right edge of the screen (operation 606). The user interface then displays a third-level corner sub-menu against the lower right corner. The user makes the final sub-stroke along the lower screen edge to invoke the bottom slice of this corner sub-menu (operation 608).

Note that embodiments of the present invention can also be implemented with corner sub-menus placed substantially in the center of a screen. FIG. 7 shows a series of corner sub-menus each of which is placed at the end of a previous stroke in accordance with one embodiment of the present invention. A user first makes contact with the touch-screen display and maintains the contact for a period of time (operation 702). A full-circle initial marking menu then appears. The user then draws a stroke across the upper right slice (operation 704).

As a result, the user interface displays a corner sub-menu which contains slices that are pointing toward the lower edge or the left edge. Note that this corner sub-menu is placed at the end of the first stroke. The user then makes a downward stroke, which invokes the right slice of the sub-menu (operation 706). The user interface then displays a third level corner sub-menu at the end of the second stroke. In response, the user makes the final sub-stroke toward left to invoke the bottom slice of this corner sub-menu (operation 708). Note that in the configuration in FIG. 7, menu-item selection would not work very well if the selection is performed by drawing a stroke beyond a slice's perimeter. The selection mechanism would work better if the slices are shaped differently.

FIG. 8 illustrates a mark which includes three strokes drawn in an expert mode, wherein the end of the last stroke is in the vicinity of the beginning of the first stroke, in accordance with one embodiment of the present invention. Note that a skilled user can quickly perform these three strokes in a gesture without the menu appearing and cause the same menu item to be selected as if the menus are displayed.

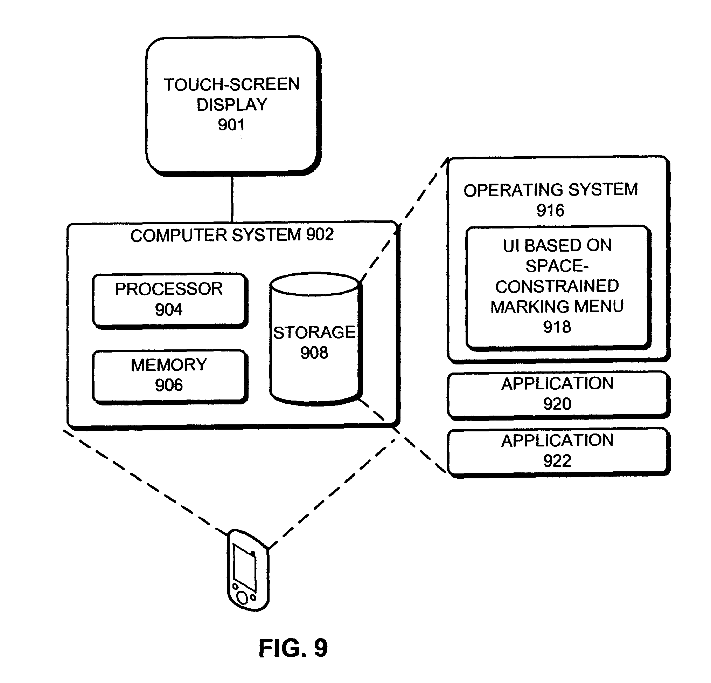

FIG. 9 illustrates an exemplary computer system that facilitates a space-constrained marking-menu user interface in accordance with one embodiment of the present invention. Computer system 902 includes a processor 904, a memory 906, and a storage device 908. Computer system 902 is coupled to a touch-screen display 901.

Storage device 908 stores code for an operating system 916, as well as applications 920 and 922. Operating system 916 further includes a user-interface module 918 based on space-constrained marking menus as taught in the present disclosure. During operation, the operating system 916, which includes the space-constrained marking-menu-based user interface module 918, is loaded in memory 906. When processor 904 executes the corresponding code stored in memory 906, the spaced-constrained marking menus are displayed on touch-screen display 901.

## Claims

1. A computer system, comprising:
a processor;
a memory;
a touch-screen display; and
a set of marking menus comprising at least one radial menu which can be displayed on the touch-screen display;
wherein a radial menu allows a user to select a menu item by performing a stroke on the touch-screen display in a direction corresponding to a slice of the radial menu associated with the menu item; and
wherein all the slices of a radial sub-menu are substantially at an angle of approximately 90° or less with respect to a previous stroke leading from a pervious radial menu, thereby allowing a series of consecutive strokes to end near the origin of the first stroke.

2. The computer system of claim 1, wherein the marking menus comprise at least one initial radial menu and at least one radial sub-menu; and wherein a radial sub-menu can be an edge radial menu placed along an edge of the touch-screen display, or a corner radial menu placed in a corner of the touch-screen display.

3. The computer system of claim 2, wherein the edge radial menu comprises three slices;
wherein two of the three slices are in opposite directions along the edge; and
wherein the middle slice of the three slices corresponds to a stroke which is substantially perpendicular to the edge and points away from the edge.

4. The computer system of claim 2 or claim 3,
wherein the corner radial menu comprises three slices;
wherein two of the three slices on the outside are along the directions of the edges which form the corner, respectively; and
wherein the middle slice of the three slices corresponds to a stroke which substantially points to a corner that is opposite to the corner associated with the corner radial menu.

5. The computer system of claim 3 or claim 4, wherein the three slices do not have equal sizes.

6. The computer system of any of the preceding claims, wherein the marking menus comprise at least one of:
a radial menu that is deformed based on the shape of the touch-screen display; and
a radial menu wherein the slices therein are grouped in locations
where the perimeter of the radial menu is visible.

7. The computer system of any of the preceding claims, wherein the marking menus are configured to allow a user to select a menu item by maintaining contact with a corresponding slice for a predetermined period.

8. The computer system of any of the preceding claims, wherein the marking menus are configured to allow a user to select a menu item by drawing a stroke either beyond the perimeter of a corresponding slice or by hitting an edge of the touch-screen display.

9. A system according to any of the preceding claims, wherein the system is portable and adapted to be hand-held.

10. A system according to any of the preceding claims, wherein the layout of the menu items allows a user to select items with one hand.

11. A storage medium storing computer-readable code which when executed by a computer causes the computer to provide a user interface, the user interface comprising:
a set of marking menus comprising at least one radial menu which can be displayed on a touch-screen display;
wherein a radial menu allows a user to select a menu item by performing a stroke on the touch-screen display in a direction corresponding to a slice of the radial menu associated with the menu item; and
wherein all the slices of a radial sub-menu are substantially at an angle of approximately 90° or less with respect to a previous stroke leading from a pervious radial menu, thereby allowing a series of consecutive strokes to end near the origin of the first stroke.
